# EUROPÄISCHE PATENTSCHRIFT

(11) **EP 2 268 840 B1**
(45) Veröffentlichungstag und Bekanntmachung des Hinweises auf die Patenterteilung: **06.06.2012**
(21) Anmeldenummer: 09738097.6
(22) Anmeldetag: 27.04.2009
(51) Int. Cl.: C22B 34/34, C22B 34/36, C22B 3/24, C22B 3/42, C01G 39/00, C01G 41/00

(54) **ADSORPTIONSVERFAHREN ZUR RÜCKGEWINNUNG VON MOLYBDAT ODER WOLFRAMAT AUS WÄSSRIGEN LÖSUNGEN**
ADSORPTION METHOD FOR RECLAIMING MOLYBDATE OR TUNGSTATE FROM AQUEOUS SOLUTIONS
PROCÉDÉ D'ADSORPTION POUR LA RÉCUPÉRATION DE MOLYBDATE OU TUNGSTATE À PARTIR DE SOLUTIONS AQUEUSES

(30) Priorität: 30.04.2008 EP 08103792; 31.07.2008 DE 102008040884
(43) Veröffentlichungstag der Anmeldung: 05.01.2011
(73) Patentinhaber: Evonik Degussa GmbH, 45128 Essen (DE)
(72) Erfinder: DIETZ, Thomas, 63808 Haibach (DE); SÜSS, Hans Ulrich, 63594 Hasselroth (DE)
(86) Internationale Anmeldenummer: PCT/EP2009/055035
(87) Internationale Veröffentlichungsnummer: WO 2009/133053

(56) Entgegenhaltungen:
- EP-A- 0 765 842
- DE-A1- 4 446 122
- GB-A- 2 065 628
- JP-A- 2003 048 716
- RU-C2- 2 176 677
- SU-A3- 1 836 465
- US-A- 4 427 490
- DATABASE WPI Week 200165 Thomson Scientific, London, GB; AN 2001-577936 XP002540018 & RU 2 172 356 C2 (VOROPANOVA L A) 20. August 2001 (2001-08-20)

## Beschreibung

Die Erfindung betrifft ein Verfahren zur Rückgewinnung von Molybdat oder Wolframat aus wässrigen Lösungen, das sich insbesondere zur Rückgewinnung von Molybdat oder Wolframat bei der mit Molybdat oder Wolframat katalysierten Delignifizierung von Zellstoff mit Wasserstoffperoxid eignet.

Üblicherweise wird die Zellstoffbleiche mit Wasserstoffperoxid im Alkalischen durchgeführt, da im Sauren bei erhöhter Temperatur Radikale gebildet werden, die zu unerwünschten Nebenreaktionen, wie dem Abbau von Zellulose, führen. Unter Verwendung eines geeigneten Katalysators ist jedoch eine Delignifizierung und Bleiche mit Wasserstoffperoxid auch unter sauren Bedingungen möglich.

US 4,427,490 beschreibt die Delignifizierung und Bleiche von Kraftzellstoff mit Wasserstoffperoxid im Sauren, katalysiert durch Natriumwolframat oder Natriummolybdat.

V. Kubelka beschreibt im Journal of Pulp and Paper Science, Vol. 18, 1992, Seiten J108-J114 einen Prozess zur Delignifizierung von Zellstoff mit Stufen zur Delignifizierung mit Sauerstoff und einer dazwischen durchgeführten Delignifizierung mit Wasserstoffperoxid, die bei einem pH-Wert von 5 und mit Natriummolybdat als Katalysator durchgeführt wird. In dem Artikel wird vorgeschlagen, Molybdat in bekannter Weise mit Hilfe von Anionenaustauschern zurückzugewinnen.

JP 11 130 762 beschreibt die Rückgewinnung von Wolframat aus einer Reaktionsmischung der mit Wolframat katalysierten Oxidation von Maleinsäureanhydrid mit wässrigem Wasserstoffperoxid. Die Reaktionsmischung wird dazu über ein Chelatierungsharz mit Glucamin-Substituenten geleitet und das Harz wird anschließend mit wässriger Schwefelsäure gewaschen. Danach wird das Wolframat mit wässriger Natronlauge aus dem Chelatierungsharz ausgewaschen. FR 2 320 946 beschreibt für das gleiche Reaktionsgemisch die Rückgewinnung von Wolframat mit einem stark basischen Anionenaustauscherharz.

JP 2003048716 beschreibt eine Rückgewinnung von Molybdat unter Verwendung eines chelatisierenden Ionenaustauscherharzes.

CZ 279 703 beschreibt einen mehrstufigen Rückgewinnungsprozess für Molybdat, bei dem zunächst Molybdat an einem schwach basischen Styrol-Divinylbenzol-Ionenaustauscher adsorbiert und in einem nächsten Schritt das Molybdat mit wässrigem Ammoniak freigesetzt wird.

In JP 06010089 B wird zur Rückgewinnung von Molybdat ein Chelatierungsharz vorgeschlagen, das Dithiocarboxylgruppen enthält.

SU 1 836 465 beschreibt eine Rückgewinnung von Molybdat unter Verwendung eines organischen Ionenaustauscherharzes. Bei dem beschriebenen Verfahren ist zur Erreichung geringer Gehalte an Molybdat oder Wolframat eine zweistufige Absorption erforderlich.

Die Rückgewinnung von Molybdat oder Wolframat mit Ionenaustauschersäulen ist für eine Anwendung in der Zellstoffbleiche jedoch wegen der erforderlichen Schritte zum Spülen der Ionenaustauscher zu aufwendig und unwirtschaftlich. Außerdem werden die bei der Delignifizierung von Zellstoff entstehenden Abbauprodukte des Lignins an den im Stand der Technik verwendeten Ionenaustauscherharzen adsorbiert, was sich nachteilig auf die ionenaustauschenden Eigenschaften des Ionenaustauscherharzes auswirkt.

DE 44 46 122 A1 beschreibt ein Verfahren zur Herstellung eines Adsorbens für anionische Verbindungen auf Basis eines Tonminerals durch Umsetzung des Tonminerals mit einer polykationischen Verbindung und die Verwendung des Adsorbens zur Immobilisierung von Molybdaten oder Wolframaten, die in kontaminierten mineralischen Feststoffgemischen, wie Böden oder Bauschutt, vorliegen.

EP 765 842 A1 beschreibt ein Verfahren zur Entfernung von Schwermetallkationen, wie Pb²⁺, Hg²⁺ oder Ni²⁺, aus wässrigen Lösungen durch Absorption an einem organisch modifizierten Smektit-Ton.

RU 2 172 356 beschreibt die Adsorption von Wolframat aus wässriger Lösung an Bentonit bei pH-Werten von weniger als 7. Das Dokument offenbart jedoch nicht, wie sich das an Bentonit adsorbierte Wolframat wieder in Form einer wässrigen Lösung zurückgewinnen lässt.

R. C. Francis et al. schlagen im Tagungsband der 93igsten Jahrestagung der PATPTAC 2007, Seiten A261 - A268 vor, bei der katalysierten Delignifizierung von Zellstoff den Molybdat-Katalysator durch Zusatz des kationischen Tensids Cetyltrimethylammoniumbromid zu fällen und den gebildeten Komplex zu filtrieren. Das Molybdat wird aus dem abfiltrierten Komplex durch Auflösen in Natronlauge und Extraktion des kationischen Tensids mit einem Lösungsmittel wie z. B. Isobutanol zurückgewonnen. Das vorgeschlagene Verfahren hat allerdings den Nachteil, dass sich der aus Molybdat mit Cetyltrimethylammoniumbromid gebildete Komplex nur schlecht filtrieren lässt und dass zur Rückgewinnung von Molybdat der Einsatz eines zusätzlichen organischen Lösungsmittels erforderlich ist.

Es besteht deshalb weiterhin ein Bedarf an einem einfach durchzuführenden Verfahren, mit dem sich Molybdat oder Wolframat aus einer wässrigen Lösung zu einem hohen Grad zurückgewinnen lassen, wobei das Verfahren zur Rückgewinnung von Molybdat oder Wolframat aus den bei der Delignifizierung von Zellstoff anfallenden wässrigen Lösungen geeignet ist.

Es wurde nun überraschend gefunden, dass sich diese Aufgabe durch die Verwendung eines wasserunlöslichen, kationisierten anorganischen Trägermaterials lösen lässt. Das erfindungsgemäße Trägermaterial bindet Molybdat oder Wolframat aus wässrigen Lösungen bei einem pH-Wert im Bereich zwischen 2 und 6 und setzt das gebundene Molybdat bzw. Wolframat bei einem pH-Wert im Bereich zwischen 6 und 14 wieder in wässrige Lösung frei. Das erfindungsgemäße Trägermaterial lässt sich außerdem in beiden pH-Bereichen einfach durch Sedimentieren, Filtrieren oder Zentrifugieren von der wässrigen Lösung abtrennen.

Gegenstand der Erfindung ist deshalb ein Verfahren zur Rückgewinnung von Molybdat oder Wolframat aus einer wässrigen Lösung, das folgende Schritte umfasst:
a) In Kontakt bringen einer Molybdat oder Wolframat enthaltenden wässrigen Lösung mit einem wasserunlöslichen, kationisierten anorganischen Trägermaterial bei einem pH-Wert im Bereich zwischen 2 und 6 unter Erhalt eines mit Molybdat oder Wolframat beladenen Trägermaterials und einer an Molybdat oder Wolframat abgereicherten wässrigen Lösung,
b) Abtrennen des mit Molybdat oder Wolframat beladenen Trägermaterials von der an Molybdat oder Wolframat abgereicherten wässrigen Lösung,
c) in Kontakt bringen des mit Molybdat oder Wolframat beladenen Trägermaterials mit einer wässrigen Lösung bei einem pH-Wert im Bereich zwischen 6 und 14 unter Erhalt eines an Molybdat oder Wolframat abgereicherten Trägermaterials und einer mit Molybdat oder Wolframat beladenen wässrigen Lösung, und
d) Abtrennen des an Molybdat oder Wolframat abgereicherten Trägermaterials von der mit Molybdat oder Wolframat beladenen wässrigen Lösung.

Die Begriffe Molybdat und Wolframat umfassen erfindungsgemäß sowohl einkernige Molybdate und Wolframate, wie MoO₄²⁻ oder WO₄²⁻, als auch mehrkernige Molybdate und Wolframate, wie Mo₇O₂₄⁶⁻, Mo₈O₂₆⁴⁻ , HW₆O₂₁⁵⁻ , W₁₂O₄₁¹⁰⁻ oder W₁₂O₃₉⁶⁻, und Heteroatome enthaltende mehrkernige Molybdate und Wolframate, wie PMo₁₂O₄₀³⁻, SiMo₁₂O₄₀³⁻ , PW₁₂O₄₀³⁻ oder SiW₁₂O₄₀³⁻ .

Bei dem erfindungsgemäßen Verfahren erfolgt in Schritt a) das in Kontakt bringen der Molybdat oder Wolframat enthaltenden wässrigen Lösung mit dem wasserunlöslichen, kationisierten anorganischen Trägermaterial bei einem pH-Wert im Bereich zwischen 2 und 6, vorzugsweise im Bereich von 3 bis 5, besonders bevorzugt im Bereich von 3,5 bis 4. Die Einstellung eines pH-Werts in diesen Bereichen ermöglicht eine fast vollständige Rückgewinnung von Molybdat oder Wolframat aus der wässrigen Lösung bei einem geringen Verbrauch an den pH-Wert regulierenden Mitteln. Bei dem in Kontakt bringen wird das wasserunlösliche, kationisierte anorganische Trägermaterial vorzugsweise mit einem Rührer oder einem Dispergator in der Molybdat oder Wolframat enthaltenden wässrigen Lösung verteilt. Das in Kontakt bringen kann bei einer beliebigen Temperatur erfolgen, geeignet sind Temperaturen im Bereich von 0 bis 100 °C.

Das kationisierte anorganische Trägermaterial wird in Schritt a) beim in Kontakt bringen mit der Molybdat oder Wolframat enthaltenden wässrigen Lösung vorzugsweise in einer Menge von 10 bis 1000 Gewichtsteilen Trägermaterial je Gewichtsteil Molybdän oder in einer Menge von 200 bis 10000 Gewichtsteilen Trägermaterial je Gewichtsteil Wolfram eingesetzt. Zur Rückgewinnung von Molybdat werden besonders bevorzugt 50 bis 500 und insbesondere 100 bis 300 Gewichtsteile Trägermaterial je Gewichtsteil Molybdän eingesetzt. Zur Rückgewinnung von Wolframat werden besonders bevorzugt 1000 bis 5000 und insbesondere 2000 bis 3000 Gewichtsteile Trägermaterial je Gewichtsteil Molybdän eingesetzt.

In Schritt b) des erfindungsgemäßen Vefahrens wird das mit Molybdat oder Wolframat beladene Trägermaterial von der an Molybdat oder Wolframat abgereicherten wässrigen Lösung abgetrennt. Das Abtrennen kann mit allen dem Fachmann bekannten Fest-Flüssig-Trennverfahren erfolgen, beispielsweise durch Sedimentieren, Filtrieren oder Zentrifugieren. Das abgetrennte, mit Molybdat oder Wolframat beladenen Trägermaterial kann zusätzlich mit Wasser mit einem pH-Wert zwischen 2 und 6 gewaschen werden, um den Anteil an daran haftenden organischen Verunreinigungen zu verringern.

In Schritt c) des erfindungsgemäßen Vefahrens wird das in Schritt b) abgetrennte, mit Molybdat oder Wolframat beladene Trägermaterial mit einer wässrigen Lösung bei einem pH-Wert im Bereich zwischen 6 und 14 in Kontakt gebracht. In diesem pH-Bereich wird Molybdat oder Wolframat vom Träger wieder abgelöst und es wird ein an Molybdat oder Wolframat abgereichertes Trägermaterial und eine mit Molybdat oder Wolframat beladene wässrige Lösung erhalten. Der pH-Wert wird dabei vorzugsweise im Bereich von 8 bis 12 und besonders bevorzugt im Bereich von 9 bis 11 gewählt. Die Einstellung eines pH-Werts in diesen Bereichen ermöglicht eine fast vollständige Ablösung von Molybdat oder Wolframat von dem Träger bei einem geringen Verbrauch an den pH-Wert regulierenden Mitteln. Bei dem in Kontakt bringen wird das mit Molybdat oder Wolframat beladene Trägermaterial vorzugsweise mit einem Rührer oder einem Dispergator in der wässrigen Lösung verteilt. Das in Kontakt bringen kann bei einer beliebigen Temperatur erfolgen, geeignet sind Temperaturen im Bereich von 0 bis 100 °C.

In Schritt d) des erfindungsgemäßen Vefahrens wird das an Molybdat oder Wolframat abgereicherte Trägermaterial von der mit Molybdat oder Wolframat beladenen wässrigen Lösung abgetrennt. Das Abtrennen kann mit allen dem Fachmann bekannten Fest-Flüssig-Trennverfahren erfolgen, beispielsweise durch Sedimentieren, Filtrieren oder Zentrifugieren. Das abgetrennte, an Molybdat oder Wolframat abgereicherte Trägermaterial kann zusätzlich mit einer wässrigen Lösung mit einem pH-Wert zwischen 6 und 14 gewaschen werden, um die Ablösung von Molybdat oder Wolframat vom Trägermaterial zu vervollständigen. Die beim Waschen resultierende Waschflüssigkeit wird vorzugsweise mit der mit Molybdat oder Wolframat beladenen wässrigen Lösung vereinigt.

Das in Schritt d) abgetrennte, an Molybdat oder Wolframat abgereicherte Trägermaterial kann in Schritt a) des Verfahrens wieder zur Rückgewinnung von Molybdat oder Wolframat eingesetzt werden.

Im erfindungsgemäßen Verfahren wird zur Abtrennung ein wasserunlösliches, kationisiertes anorganisches Trägermaterial verwendet. Als kationisiertes anorganisches Trägermaterial eignen sich anorganische Trägermaterialien, deren Oberfläche mit positiv geladenen funktionellen Gruppen modifiziert wurde. Die Modifizierung kann beispielsweise durch Umsetzung der Oberfläche mit Reagenzien erfolgen, die eine positiv geladene funktionelle Gruppe kovalent auf der Oberfläche verankern. Geeignete wasserunlösliche, kationisierte anorganische Trägermaterialien mit kovalent verankerten positiv geladenen funktionellen Gruppen sind beispielsweise mit Aminosilanen modifizierte gefällte oder pyrogene Kieselsäuren, die vorzugsweise zusätzlich an der Aminogruppe quaternisiert sind. Die Modifizierung kann alternativ auch durch Ionenaustausch eines an der Oberfläche negativ geladenen anorganischen Trägermaterials mit einem quaternären Ammoniumsalz erfolgen. Das dazu verwendete quaternäre Ammoniumsalz weist vorzugsweise mindestens einen unpolaren Alkylrest mit 6 bis 24, besonders bevorzugt 12 bis 22 Kohlenstoffatomen auf, um eine Ablösung der quaternären Ammoniumionen vom Träger im Sauren zu verhindern.

Vorzugsweise wird im erfindungsgemäßen Verfahren als wasserunlösliches, kationisiertes anorganisches Trägermaterial ein kationisiertes Schichtsilikat verwendet, besonders bevorzugt ein mit einem quaternären Ammoniumsalz ionenausgetauschtes Schichtsilikat. Als Schichtsililkate eignen sich dabei Kaoline, Smektite, Illite, Bentonite (Montmorillonite), Hektorite, Pyrophillite, Attapulgite, Sepiolite und Laponite, vorzugsweise mit einem quaternisierten Ammoniumsalz ionenausgetauschte Bentonite, Hektorite und Attapulgite, besonders bevorzugt mit einem quaternären Ammoniumsalz ionenausgetauschter Bentonit.

Mit quaternisierten Ammoniumsalzen ionenausgetauschte Bentonite, Hektorite und Attapulgite sind kommerziell erhältlich: Quaternium-18 Bentonit als Bentone 34 von Rheox Corp. und als Claytone 34, Claytone 40 und Claytone XL von Southern Clay; Stearalkonium Bentonit als Tixogel LG von United Catalysts, als Bentone SD-2 von Elementis Specialties und als Claytone AF und Claytone APA von Southern Clay; Quaternium-18/Benzalkonium Bentonit als Claytone GR, Claytone HT und Claytone PS von Southern Clay; Quaternium-18 Hectorite als Bentone 38 von Rheox Corp.; Dihydrogenated Tallow Benzylmonium Hectorite als Bentone SD-3 von Rheox Corp.; Stearalkonium Hectorite als Bentone 27 von Rheox Corp.; sowie kationisierter Attapulgit als Vistrol 1265 von Cimbar. Diese ionenausgetauschten Schichtsilikate können in dem erfindungsgemäßen Verfahren sowohl als Pulver als auch in Form der im Handel erhältlichen Dispersionen in einem Öl oder einem organischen Lösungsmittel eingesetzt werden.

Neben den handelsüblichen, mit Tetraalkylammoniumionen ionenausgetauschten Bentoniten, Hektoriten und Attapulgiten können auch die entsprechenden mit quaternisierten Alkanolaminfettsäureestern ionenausgetauschten Materialien eingesetzt werden, insbesondere mit Dimethyldiethanolammonium-mono- und -difettsäureester, sowie Methyltriethanolammonium-mono-, -di- und -trifettsäureester ionenausgetauschter Bentonit. Vorzugsweise werden dabei entsprechende Ester mit gesättigten Fettsäuren, insbesondere gesättigten Fettsäuren mit 12 bis 18 Kohlenstoffatomen verwendet.

In einer bevorzugten Ausführungsform des erfindungsgemäßen Verfahrens wird das wasserunlösliche, kationisierte anorganische Trägermaterial in einem Festbett angeordnet. Die Schritte a) und b) des Verfahrens erfolgen dann durch Durchleiten der Molybdat oder Wolframat enthaltenden wässrigen Lösung durch ein Festbett, das das wasserunlösliche, kationisierte anorganische Trägermaterial enthält. Bereits beim Durchleiten der Molybdat oder Wolframat enthaltenden wässrigen Lösung durch das Festbett wird das in der Lösung enthaltene Molybdat oder Wolframat an das wasserunlösliche, kationisierte anorganische Trägermaterial gebunden und die das Festbett verlassende wässrige Lösung ist an Molybdat oder Wolframat abgereichert. Nach der Beladung des im Festbett angeordneten wasserunlöslichen, kationisierten anorganischen Trägermaterials werden die Schritte c) und d) des Verfahrens durchgeführt, indem eine wässrige Lösung, die einen pH-Wert im Bereich zwischen 6 und 14 aufweist, durch das in den Schritten a) und b) mit Molybdat oder Wolframat beladene Festbett geleitet wird. Die dabei das Festbett verlassende wässrige Lösung enthält den größten Teil des in Schritt a) an das wasserunlösliche, kationisierte anorganische Trägermaterial gebundenen Molybdats oder Wolframats und das Festbett kann nach Durchführung dieser Schritte wieder zur Rückgewinnung von Molybdat oder Wolframat in den Schritten a) und b) eingesetzt werden.

Das Durchleiten der Molybdat oder Wolframat enthaltenden wässrigen Lösung durch das Festbett wird vorzugsweise beendet, bevor der Gehalt an Molybdat oder Wolframat in der das Festbett verlassenden wässrigen Lösung über den gewünschten Restgehalt ansteigt.

Vorzugsweise enthält das Festbett zusätzlich zu dem wasserunlöslichen, kationisierten anorganischen Trägermaterial noch ein wasserunlösliches Füllmaterial zur Erhöhung der Porosität des Festbetts. Als wasserunlösliche Füllmaterialien eignen sich aus dem Stand der Technik bekannte Filterhilfsmittel, die synthetischer oder natürlicher, organischer oder anorganischer Natur sein können. Ein geeignetes anorganisches Filterhilfsmittel ist beispielsweise das unter dem Handelsnamen Celite 503 von der Firma Merck erhältliche Silicagel. Ein geeignetes natürliches organisches Filterhilfsmittel ist beispielsweise Cellulose, die unter dem Handelsnamen Jelucel HM 200 von der Firma Jelu erhältlich ist. Auch synthetische Polymere, aus denen die Entwässerungssiebmatten in den Waschpressen von Zellstoff-und Papiermaschinen bestehen, können als wasserunlösliches Füllmaterial verwendet werden. Besonders bevorzugt wird Cellulose als wasserunlösliches Füllmaterial verwendet. Das Festbett enthält das wasserunlösliche, kationisierte anorganische Trägermaterial und das wasserunlösliche Füllmaterial vorzugsweise in einem Gewichtsverhältnis von 10:1 bis 1:100. Besonders bevorzugt enthält das Festbett eine Zusammensetzung, die ein wasserunlösliches, kationisiertes anorganisches Trägermaterial und Cellulose in einem Gewichtsverhältnis von 10:1 bis 1:100, insbesondere 10:1 bis 1:10, enthält. Durch die Verwendung eines zusätzlichen Füllmaterials lässt sich der Beladungsgrad des wasserunlöslichen, kationisierten anorganischen Trägermaterials mit Molybdat oder Wolframat verbessern. Außerdem lässt sich der Druckverlust beim Durchleiten der wässrigen Lösungen durch das Festbett verringern und das Verfahren rascher durchführen, sowie Störungen durch eine Verstopfung des Festbetts durch Verunreinigungen vermeiden.

Bevorzugt werden mindestens zwei parallel geschaltete Festbetten verwendet, in denen die Schritte a) und b) und die Schritte c) und d) abwechselnd durchgeführt werden, d.h. in einem ersten Festbett erfolgt in den Schritten a) und b) die Rückgewinnung von Molybdat oder Wolframat aus einer wässrigen Lösung, während in einem parallel geschalteten zweiten, bereits mit Molybdat oder Wolframat beladenen Festbett in den Schritten c) und d) das Molybdat oder Wolframat vom Träger wieder abgelöst wird. In einer besonders bevorzugten Ausführungsform wird dann so zwischen den parallel angeordneten Festbetten umgeschaltet, dass das Durchleiten der Molybdat oder Wolframat enthaltenden wässrigen Lösung durch ein Festbett kontinuierlich erfolgt.

Gegenstand der Erfindung ist außerdem ein Verfahren zur Rückgewinnung von Molybdat oder Wolframat bei der Delignifizierung von Zellstoff, bei dem Zellstoff in einer wässrigen Mischung enthaltend 0,1 bis 5 Gew.-% Wasserstoffperoxid und 10 bis 1000 ppm Molybdän in Form von Molybdat oder 200 bis 10000 ppm Wolfram in Form von Wolframat, jeweils bezogen auf die Masse an trockenem Zellstoff, bei einer Temperatur von 30 bis 100 °C und einem pH-Wert im Bereich von 1 bis 7 umgesetzt und der Zellstoff von der wässrigen Lösung abgetrennt wird, aus der resultierenden wässrigen Lösung mit den oben genannten Schritten Molybdat oder Wolframat zurückgewonnen wird und die im letzten Schritt resultierende, mit Molybdat oder Wolframat beladene wässrige Lösung in die Delignifizierung von Zellstoff mit Wasserstoffperoxid zurückgeführt wird.

Bei der Delignifizierung von Zellstoff unter Zusatz von Molybdat oder Wolframat als Katalysator werden 0,1 bis 5 Gew.-%, vorzugsweise 0,5 bis 4 Gew.-% und besonders bevorzugt 1 bis 3 Gew.-% Wasserstoffperoxid, bezogen auf die Masse an trockenem Zellstoff, eingesetzt. Bei Verwendung von Molybdat als Katalysator wird das Molybdat in einer Menge von 10 bis 1000 ppm, vorzugsweise 100 bis 700 ppm und besonders bevorzugt 200 bis 600 ppm Molybdän, bezogen auf die Masse an trockenem Zellstoff, eingesetzt. Bei Verwendung von Wolframat als Katalysator wird das Wolframat in einer Menge von 200 bis 10000 ppm, vorzugsweise 500 bis 5000 ppm und besonders bevorzugt 1500 bis 3000 ppm Wolfram, bezogen auf die Masse an trockenem Zellstoff, eingesetzt. Durch die Wahl der Mengen an Wasserstoffperoxid und Molybdat oder Wolframat in diesen Bereichen wird eine wirksame Delignifizierung und Bleiche des Zellstoffs erzielt und ein Zellstoff mit verringerter Vergilbungsneigung erhalten.

Die Delignifizierung von Zellstoff unter Zusatz von Molybdat oder Wolframat als Katalysator wird bei einer Temperatur von 30 bis 100 °C, vorzugsweise 60 bis 95 °C und besonders bevorzugt 75 bis 95 °C durchgeführt, wobei der pH-Wert im Bereich von 1 bis 7, bevorzugt 2 bis 6 und besonders bevorzugt 2,5 bis 5,5 gewählt wird. Die Wahl der Reaktionsbedingungen bewirkt eine rasche und wirksame Delignifizierung und Bleiche des Zellstoffs. Außerdem lässt sich die Delignifizierung unter Zusatz von Molybdat oder Wolframat bei diesen Reaktionsbedingungen mit nur geringem zusätzlichen Bedarf an Energie und/oder Chemikalien zur Einstellung von Temperatur und/oder pH-Wert mit weiteren Verfahrensstufen zur Delignifizierung und/oder Bleiche kombinieren.

Die nachfolgenden Beispiele illustrieren das beanspruchte Verfahren, ohne jedoch den Gegenstand der Erfindung zu beschränken.

### Beispiele:

### Beispiel 1 (Vergleichsbeispiel)

### Delignifizierung von Zellstoff mit Wasserstoffperoxid ohne Molybdatzusatz

761 g Eukalyptuszellstoff, entsprechend 200 g absolut trockenem Zellstoff, mit einer Kappazahl von 10,3, einem Weißgehalt von 57,0 % ISO und einem Gelbwert von 22,1 wurden mit Wasser und 1,0 Gew.-% Wasserstoffperoxid (bezogen auf absolut trockenen Zellstoff) auf eine Stoffdichte von 10 Gew.-% gebracht und der pH-Wert wurde mit Schwefelsäure auf pH 2,7 eingestellt. Die Mischung wurde in einem Plastikbeutel im Wasserbad 120 min auf 90 °C erhitzt. Danach wurde Wasser zugegeben, so dass eine Suspension mit 2 Gew.-% Stoffdichte erhalten wurde, und der Zellstoff über eine Filternutsche mit Filterpapier abfiltriert. Der behandelte Zellstoff hatte eine Kappazahl von 5,4, einen Weißgehalt von 60,2 % ISO und einen Gelbwert von 22,6. Das erhaltene Filtrat hatte einen pH-Wert von 3,0. Aus dem Restperoxidgehalt des Filtrats ergab sich ein Umsatz an Wasserstoffperoxid von 59 %.

### Beispiel 2

### Delignifizierung von Zellstoff mit Wasserstoffperoxid und Molybdatrückgewinnung mit kationisiertem Schichtsilikat

Beispiel 1 wurde wiederholt, der Mischung aus Zellstoff, Wasser und Wasserstoffperoxid wurde vor dem Erhitzen jedoch zusätzlich Natriummolybdat in einer Menge von 500 ppm Molybdän bezogen auf absolut trockenen Zellstoff zugesetzt. Der behandelte Zellstoff hatte eine Kappazahl von 3,5, einen Weißgehalt von 61,5 % ISO und einen Gelbwert von 19,8. Das erhaltene Filtrat hatte einen pH-Wert von 3,0. Aus dem Restperoxidgehalt des Filtrats ergab sich ein Umsatz an Wasserstoffperoxid von 79 %. Das Filtrat enthielt 9,8 ppm Molybdän, was 98 % der eingesetzten Menge entsprach.

Der pH-Wert des Filtrats wurde mit 10 Gew.-% Natronlauge auf pH 3,7 eingestellt. Danach wurden 0,2 Gew.-% (bezogen auf das Gewicht des Filtrats) kationisch modifizierter Bentonit BETONE® SD-2 (Elementis Specialties) zugegeben und mit einem Dispergierrührer mit Lochscheibe (Pendraulik Modell LD50) bei einer Drehzahl von ca. 1000 min⁻¹ für 15 min dispergiert. Der pH-Wert wurde nochmals mit 10 Gew.-% Natronlauge auf pH 3,7 eingestellt und die Dispersion über eine Filternutsche mit Filterpapier abfiltriert. Der Molybdän-Gehalt im Filtrat betrug 0,46 ppm, was einer Abtrennung von Molybdän durch den Bentonit von 95 % entspricht.

Der Bentonit-Filterkuchen wurde trockengesaugt und in Wasser, dessen pH-Wert mit 10 Gew.-% Natronlauge auf pH 10 eingestellt wurde, bei einer Feststoffdichte von 5 % mit einem Magnetrührer 30 min bei 50 °C gerührt. Der pH-Wert wurde nochmals mit 10 Gew.-% Natronlauge auf pH 10 eingestellt, die Mischung wurde über eine Filternutsche mit Filterpapier abfiltriert und der Filterkuchen zweimal mit jeweils 20 % des Filtratvolumens an mit Natronlauge auf pH 10 eingestelltem 50 °C warmem Wasser gewaschen. Das dabei erhaltene Filtrat enthielt 91 % der zur Behandlung des Zellstoffs eingesetzten Menge an Molybdat.

### Beispiel 3

### Delignifizierung von Zellstoff unter Verwendung von zurückgewonnenem Molybdat

Beispiel 2 wurde mit einer Menge von 228 g Eukalyptuszellstoff, entsprechend 60 g absolut trockener Stoff, wiederholt. Zur Herstellung der Mischung aus Zellstoff, Wasser, Wasserstoffperoxid und Molybdat wurde jedoch an Stelle von Natriummolybdat das am Ende von Beispiel 2 erhaltene Filtrat eingesetzt. An Stelle von frischem Bentonit BETONE® SD-2 wurde die entsprechende Menge des am Ende von Beispiel 2 erhaltenen Bentonit-Filterkuchens verwendet.

Der behandelte Zellstoff hatte eine Kappazahl von 2,9, einen Weißgehalt von 62,2 % ISO und einen Gelbwert von 19,1. Das nach der Behandlung des Zellstoffs erhaltene Filtrat hatte einen pH-Wert von 3,0. Aus dem Restperoxidgehalt des Filtrats ergab sich ein Umsatz an Wasserstoffperoxid von 81 %. Das Filtrat enthielt 9,8 ppm Molybdän, was 98 % der eingesetzten Menge entsprach. Nach der Behandlung des Filtrats mit dem Bentonit bei pH 3,7 betrug der Molybdän-Gehalt im Filtrat 0,54 ppm, was einer Abtrennung von Molybdän durch den Bentonit von 94 % entspricht. Das bei der nachfolgenden Behandlung des Bentonits mit Wasser von pH 10 erhaltene Filtrat enthielt 90 % der zur Behandlung des Zellstoffs eingesetzten Menge an Molybdat.

### Beispiel 4 (Vergleichsbeispiel)

### Delignifizierung von Zellstoff mit Wasserstoffperoxid und Molybdatrückgewinnung mit Ionenaustauscherharz

Beispiel 2 wurde mit Eukalyptuszellstoff mit einer Kappazahl von 12,0, einem Weißgehalt von 52,3 % ISO und einem Gelbwert von 29,9 wiederholt. Das bei der Delignifizierung des Zellstoffs erhaltene Filtrat enthielt 8,2 ppm Molybdän. Zur Rückgewinnung des Molybdats wurde an Stelle des kationischen Schichtsilikats die gleiche Menge Anionenaustauscherharz DOWEX M-43 zugegeben und an Stelle des Dispergierrührers wurde 60 min mit einem Magnetrührer gerührt. Der Molybdän-Gehalt im Filtrat der Molybdatrückgewinnung betrug 2,0 ppm, was einer Abtrennung von Molybdän durch das Anionenaustauscherharz von 76 % entspricht.

Beispiel 4 zeigt im Vergleich mit Beispiel 2, dass die Abtrennung von Molybdat aus dem Filtrat der Zellstoffdelignifizierung mit dem kationisierten Schichtsilikat vollständiger ist als mit dem Anionenaustauscherharz.

### Beispiel 5

### Rückgewinnung von Molybdat mit unterschiedlichen Schichtsilikaten

Wässrige Lösungen von Natriummolybdat mit einem Gehalt an 30 ppm Molybdän, die mit Schwefelsäure auf pH 3,7 eingestellt wurden, wurden mit jeweils 0,2 Gew.-% (bezogen auf das Gewicht der Lösung) Schichtsilikat versetzt und mit einem Dispergierrührer mit Lochscheibe (Pendraulik Modell LD50) bei einer Drehzahl von ca. 1000 min⁻¹ für 15 min dispergiert. Der pH-Wert wurde nochmals mit 10 Gew.-% Natronlauge auf pH 3,7 eingestellt und die Dispersion über eine Filternutsche mit Filterpapier abfiltriert. Im Fall des Schichtsilikats Syntal® 696 musste der pH-Wert durch Zugabe von Schwefelsäure eingestellt werden. Tabelle 1 zeigt die untersuchten Schichtsilikate, den Gehalt an Molybdän im Filtrat und die Filtrierbarkeit des mit Molybdat beladenen Schichtsilikats.

Die Ergebnisse von Tabelle 1 zeigen, dass sich mit dem kationisierten Schichtsilikat das Molybdat vollständiger und wegen der verbesserten Filtrierbarkeit einfacher zurückgewinnen lässt als mit einem nicht kationisierten Schichtsilikat.

### Beispiel 6 (Vergleichsbeispiel)

### Rückgewinnung von Molybdat mit unterschiedlichen Ionenaustauscherharzen

Beispiel 5 wurde wiederholt, an Stelle eines Schichtsilikats wurde jedoch ein Ionenaustauscherharz verwendet und an Stelle des Dispergierrührers wurde ein Magnetrührer verwendet. Tabelle 2 zeigt die untersuchten Ionenaustauscherharze, den Gehalt an Molybdän im Filtrat und die Filtrierbarkeit des mit Molybdat beladenen Ionenaustauscherharzes.

Die Ergebnisse von Tabelle 2 zeigen im Vergleich mit den Ergebnissen von Tabelle 1, dass sich mit dem kationisierten Schichtsilikat das Molybdat vollständiger zurückgewinnen lässt als mit einem Ionenaustauscherharz.

**Tabelle 1**

| Rückgewinnung von Molybdat mit unterschiedlichen Schichtsilikaten | | |
|---|---|---|
| Schichtsilikat | Molybdän-Gehalt im Filtrat in ppm | Filtrierbarkeit |
| BETONE® SD-2 (kationisierter Bentonit, Elementis Specialties) | kleiner 1 | leicht filtrierbar |
| EX M 1694 * (säureaktivierter Ca-Bentonit, Süd-Chemie) | 24 | leicht filtrierbar |
| BETONE® HC * (gereinigter Hectorit, Elementis Specialties) | nicht bestimmt | nicht filtrierbar |
| Syntal® 696 * (Basisches Mg-Al-Carbonat, Süd-Chemie) | 5,6 | schwer filtrierbar |

| | | |
|---|---|---|
| *nicht erfindungsgemäß | | |

**Tabelle 2**

| Rückgewinnung von Molybdat mit unterschiedlichen Ionenaustauscherharzen | | |
|---|---|---|
| Ionenaustauscherharz | Molybdän-Gehalt im Filtrat in ppm | Filtrierbarkeit |
| DOWEX® M-43 (schwach basisches Anionenaustauscherharz, Dow Chemical) | 7,9 | leicht filtrierbar |
| DOWEX® PSR-3 (stark basisches Anionenaustauscherharz, Dow Chemical) | 14,6 | leicht filtrierbar |
| DOWEX® NSR-1 (stark basisches Anionenaustauscherharz, Dow Chemical) | 13,4 | leicht filtrierbar |
| DOWEX® MARA MSA (stark basisches Anionenaustauscherharz, Dow Chemical) | 13,9 | leicht filtrierbar |

### Beispiel 7

### Rückgewinnung von Molybdat mit einem Festbett aus kationisiertem Bentonit

2 g kationisch modifizierter Bentonit BENTONE® SD-2 (Elementis Specialties) wurden in 40 ml Wasser suspendiert und über eine Filternutsche mit 4,5 cm Durchmesser und einem Papierfilter mit 12-25 µm Porengröße abgesaugt. Der erhaltene Filterkuchen mit einer Höhe von ca. 5 mm wurde als Festbett für die Rückgewinnung von Molybdat eingesetzt. Dazu wurden bei Raumtemperatur 500 ml einer bei der Delignifizierung von Zellstoff erhaltenen Lösung, die ein Silicomolybdat in einer Menge von 12,9 ppm Mo enthielt, in Portionen von je 100 ml durch den Filterkuchen gesaugt und anschließend die Konzentration an Mo mit Teststäbchen Merckoquant® Molybdän-Test in den erhaltenen Portionen bestimmt. Die ersten beiden Portionen enthielten Molybdat in einer Menge von weniger als 1 ppm Mo, die weiteren zwei Portionen in einer Menge von weniger als 5 ppm Mo und erst die letzte Portion enthielt Molybdat in einer Menge von mehr als 5 ppm Mo. Durch den Filterkuchen wurden anschließend dreimal je 20 ml 0,5 Gew.-% Natronlauge gesaugt und die dabei erhaltenen Filtrate vereinigt. Die vereinigten Filtrate enthielten Molybdat in einer Menge von mehr als 50 ppm Mo, d.h. mehr als 65 % des Molybdäns, das in der bei der Delignifizierung von Zellstoff erhaltenen Lösung enthalten war.

### Beispiel 8

### Rückgewinnung von Molybdat mit einem Festbett aus kationisiertem Bentonit und einem Füllmaterial

Beispiel 7 wurde wiederholt mit dem Unterschied, dass zur Herstellung des Festbetts erst eine Suspension von 1,27 g Celite® 503 (Merck) in 10 ml Wasser und anschließend eine Suspension von 2 g Celite® 503 und 2 g BENTONE® SD-2 in 40 ml Wasser über die gleiche Filternutsche abgesaugt wurden. Es wurde die gleiche Rückgewinnung von Molybdat erzielt.

### Beispiel 9

### Rückgewinnung von Molybdat mit einem Festbett aus kationisiertem Bentonit und einem Füllmaterial

Beispiel 7 wurde wiederholt mit dem Unterschied, dass zur Herstellung des Festbetts eine Suspension von 1 g Buchensulfitzellstoff, 1 g Celite® 503 und 2 g BENTONE® SD-2 in 80 ml Wasser über die Filternutsche abgesaugt wurden und dass dreimal je 50 ml 0,5 Gew.-% Natronlauge an Stelle von dreimal je 20 ml 0,5 Gew.-% Natronlauge verwendet wurden. Es wurde die gleiche Rückgewinnung von Molybdat erzielt.

### Beispiel 10

### Rückgewinnung von Molybdat mit einem Festbett aus kationisiertem Bentonit und Zellstoff

10 g Buchensulfitzellstoff und 5 g kationisch modifizierter Bentonit BETONE® SD-2 (Elementis Specialties) wurden in 500 ml Wasser mit einem Dispergierrührer mit Lochscheibe (Pendraulik Modell LD50) bei einer Drehzahl von ca. 1500 min⁻¹ für 1 min dispergiert und die erhaltene Dispersion über eine Filternutsche mit 7 cm Durchmesser und einem Papierfilter mit 12-25 µm Porengröße abgesaugt. Der erhaltene Filterkuchen wurde als Festbett für die Rückgewinnung von Molybdat eingesetzt. Dazu wurden bei Raumtemperatur 1200 ml einer bei der Delignifizierung von Zellstoff erhaltenen Lösung, die ein Silicomolybdat in einer Menge von 12,9 ppm Mo enthielt, in Portionen von je 100 ml durch den Filterkuchen gesaugt und anschließend die Konzentration an Mo mit Teststäbchen Merckoquant® Molybdän-Test in den erhaltenen Portionen bestimmt. Die ersten 7 Portionen enthielten Molybdat in einer Menge von weniger als 1 ppm Mo, die weiteren 4 Portionen in einer Menge von weniger als 5 ppm Mo und erst die letzte Portion enthielt Molybdat in einer Menge von mehr als 5 ppm Mo. Durch den Filterkuchen wurden anschließend dreimal je 50 ml 0,5 Gew.-% Natronlauge und danach 50 ml Wasser gesaugt und die dabei erhaltenen Filtrate vereinigt. Die vereinigten Filtrate enthielten Molybdat in einer Menge von mehr als 50 ppm Mo, d.h. mehr als 75 % des Molybdäns, das in der bei der Delignifizierung von Zellstoff erhaltenen Lösung enthalten war.

## Patentansprüche

1. Verfahren zur Rückgewinnung von Molybdat oder Wolframat aus einer wässrigen Lösung umfassend die Schritte
a) in kontakt bringen einer Molybdat oder Wolframat enthaltenden wässrigen Lösung mit einem wasserunlöslichen, kationisierten anorganischen Trägermaterial bei einem pH-Wert im Bereich zwischen 2 und 6 unter Erhalt eines mit Molybdat oder Wolframat beladenen Trägermaterials und einer an Molybdat oder Wolframat abgereicherten wässrigen Lösung,
b) Abtrennen des mit Molybdat oder Wolframat beladenen Trägermaterials von der an Molybdat oder Wolframat abgereicherten wässrigen Lösung,
c) in Kontakt bringen des mit Molybdat oder Wolframat beladenen Trägermaterials mit einer wässrigen Lösung bei einem pH-Wert im Bereich zwischen 6 und 14 unter Erhalt eines an Molybdat oder Wolframat abgereicherten Trägermaterials und einer mit Molybdat oder Wolframat beladenen wässrigen Lösung, und
d) Abtrennen des an Molybdat oder Wolframat abgereicherten Trägermaterials von der mit Molybdat oder Wolframat beladenen wässrigen Lösung,
wobei das kationisierte anorganische Trägermaterial ein mit Tetraalkylammoniumionen oder quaternisierten Alkanolaminfettsäureestern ionenausgetauschter Bentonit, Hektorit oder Attapulgit ist.

2. Verfahren nach Anspruch 1,
**dadurch gekennzeichnet,**
**dass** in Schritt a) der pH-Wert im Bereich von 3 bis 5 und vorzugsweise im Bereich von 3,5 bis 4 liegt.

3. Verfahren nach Anspruch 1 oder 2,
**dadurch gekennzeichnet,**
**dass** in Schritt c) der pH-Wert im Bereich von 8 bis 12 und vorzugsweise im Bereich von 9 bis 11 liegt.

4. Verfahren nach einem der vorangehenden Ansprüche,
**dadurch gekennzeichnet,**
**dass** das kationisierte anorganische Trägermaterial ein mit Tetraalkylammoniumionen oder quaternisierten Alkanolaminfettsäureestern ionenausgetauschter Bentonit ist.

5. Verfahren nach einem der vorangehenden Ansprüche,
**dadurch gekennzeichnet,**
**dass** das kationisierte anorganische Trägermaterial beim in Kontakt bringen mit einer Molybdat oder Wolframat enthaltenden wässrigen Lösung in einer Menge von 10 bis 1000 Gewichtsteilen Trägermaterial je Gewichtsteil Molybdän oder in einer Menge von 200 bis 10000 Gewichtsteilen Trägermaterial je Gewichtsteil Wolfram eingesetzt wird.

6. Verfahren nach Anspruch 5,
**dadurch gekennzeichnet,**
**dass** das kationisierte anorganische Trägermaterial in einer Menge von 50 bis 500, vorzugsweise 100 bis 300 Gewichtsteilen Trägermaterial je Gewichtsteil Molybdän eingesetzt wird.

7. Verfahren nach Anspruch 5.,
**dadurch gekennzeichnet,**
**dass** das kationisierte anorganische Trägermaterial in einer Menge von 1000 bis 5000, vorzugsweise 2000 bis 3000 Gewichtsteilen Trägermaterial je Gewichtsteil Wolfram eingesetzt wird.

8. Verfahren nach einem der vorangehenden Ansprüche,
**dadurch gekennzeichnet,**
**dass** die Schritte a) und b) durchgeführt werden durch Durchleiten der Molybdat oder Wolframat enthaltenden wässrigen Lösung durch ein Festbett., das das wasserunlösliche, kationisierte anorganische Trägermaterial enthält und die Schritte c) und d) durchgeführt werden durch Durchleiten einer wässrigen Lösung mit einem pH-Wert im Bereich zwischen 6 und 14 durch das in den Schritten a) und b) mit Molybdat oder Wolframat beladene Festbett.

9. Verfahren nach Anspruch 8,
**dadurch gekennzeichnet,**
**dass** das Festbett zusätzlich zu dem wasserunlöslichen, kationisierten anorganischen Trägermaterial ein wasserunlösliches Füllmaterial enthält.

10. Verfahren nach Anspruch 9,
**dadurch gekennzeichnet,**
**dass** Cellulose als wasserunlösliches Füllmaterial verwendet wird.

11. Verfahren nach Anspruch 9 oder 10,
**dadurch gekennzeichnet,**
**dass** das wasserurilösliche, kationisierte anorganische Trägermaterial und das wasserunlösliche Füllmaterial in einem Gewichtsverhältnis von 10:1 bis 1:100 verwendet werden.

12. Verfahren nach einem der Ansprüche 8 bis 11,
**dadurch gekennzeichnet,**
**dass** mindestens zwei parallel geschaltete Festbetten verwendet werden, in denen die Schritte a) und b) und die Schritte c) und d) abwechselnd durchgeführt werden.

13. Verfahren nach Anspruch 12,
**dadurch gekennzeichnet,**
**dass** das Durchleiten der Molybdat oder Wolframat enthaltenden wässrigen Lösung durch ein Festbett kontinuierlich erfolgt durch Umschalten zwischen parallel geschalteten Festbetten.

14. Verfahren nach einem der vorangehenden Ansprüche,
**dadurch gekennzeichnet,**
**dass** in einem zusätzlichen.Schritt Zellstoff in einer wässrigen Mischung enthaltend 0,1 bis 5 Gew.-% Wasserstoffperoxid und 10 bis 1000 ppm Molybdän .in Form von Molybdat oder 200 bis 10000 ppm Wolfram in Form von Wolframat, jeweils bezogen auf die Masse an trockenem Zellstoff, bei einer Temperatur von 30 bis 100 °C und einem pH-Wert im Bereich von 1 bis 7 umgesetzt wird, der Zellstoff von der wässrigen Mischung abgetrennt wird, die dabei resultierende wässrige Lösung in Schritt a) mit dem wasserunlöslichen, kationisierten anorganischen Trägermaterial in Kontakt gebracht wird und die in Schritt d) abgetrennte, mit.Molybdat oder Wolframat beladene wässrige Lösung in den Schritt der Umsetzung von Zellstoff mit Wasserstoffperoxid zurückgeführt wird.

15. Verfahren nach Anspruch 14,
**dadurch gekennzeichnet,**
**dass** bei der Umsetzung des Zellstoffs die wässrige Mischung 0,5 bis 4 Gew.-%, vorzugsweise 1 bis 3 Gew.-%, Wasserstoffperoxid, bezogen auf die Masse an trockenem Zellstoff, enthält.

16. Verfahren nach Anspruch 14 oder 15,
**dadurch gekennzeichnet,**
**dass** bei der Umsetzung des Zellstoffs die wässrige Mischung 100 bis 700 ppm, vorzugsweise 200 bis 600 ppm, Molybdän, bezogen auf die Masse an trockenem Zellstoff, in Form von Molybdat enthält.

17. Verfahren nach Anspruch 14 oder 15,
**dadurch gekennzeichnet,**
**dass** bei der Umsetzung des Zellstoffs die wässrige Mischung bis 5000 ppm, vorzugsweise 1500 bis 3000 ppm, Wolfram, bezogen auf die Masse an trockenem Zellstoff, in Form von Wolframat enthält.

18. Verfahren nach einem der Ansprüche 14 bis 17,
**dadurch gekennzeichnet,**
**dass** die Umsetzung des Zellstoffs bei einer Temperatur von 60 bis 95 °C, vorzugsweise 75 bis 95 °C, erfolgt.

19. Verfahren nach einem der Ansprüche 14 bis 18,
**dadurch gekennzeichnet,**
**dass** die Umsetzung des Zellstoffs bei einem pH-Wert von 2 bis 6, vorzugsweise 2, 5 bis 5, 5, erfolgt.

## Claims

1. Process for recovering molybdate or tungstate from an aqueous solution, comprising the steps:
a) contacting a molybdate- or tungstate-containing aqueous solution with a water-insoluble, cationized inorganic carrier material at a pH in the range from 2 to 6 to give a carrier material laden with molybdate or tungstate and an aqueous solution depleted in molybdate or tungstate,
b) separating the carrier material laden with molybdate or tungstate from the aqueous solution depleted in molybdate or tungstate,
c) contacting the carrier material laden with molybdate or tungstate with an aqueous solution at a pH in the range from 6 to 14 to give a carrier material depleted in molybdate or tungstate and an aqueous solution laden with molybdate or tungstate, and
d) separating the carrier material depleted in molybdate or tungstate from the aqueous solution laden with molybdate or tungstate,
where the cationized inorganic support material is a bentonite, hectorite or attapulgite which has been ion-exchanged with tetraalkylammonium ions or quaternized alkanolamine esters of fatty acids.

2. Process according to Claim 1,
**characterized in that**
the pH in step a) is in the range from 3 to 5 and preferably in the range from 3.5 to 4.

3. Process according to Claim 1 or 2,
**characterized in that**
the pH in step c) is in the range from 8 to 12 and preferably in the range from 9 to 11.

4. Process according to any of the preceding claims,
**characterized in that**
the cationized inorganic carrier material is a bentonite which has been ion-exchanged with tetraalkylammonium ions or quaternized alkanolamine esters of fatty acids.

5. Process according to any of the preceding claims,
**characterized in that**
the cationized inorganic carrier material is used in an amount of from 10 to 1000 parts by weight of carrier material per part by weight of molybdenum or in an amount of from 200 to 10 000 parts by weight of carrier material per part by weight of tungsten in the contacting with a molybdate- or tungstate-containing aqueous solution.

6. Process according to Claim 5,
**characterized in that**
the cationized inorganic carrier material is used in an amount of from 50 to 500 parts by weight, preferably from 100 to 300 parts by weight, of carrier material per part by weight of molybdenum.

7. Process according to Claim 5,
**characterized in that**
the cationized inorganic carrier material is used in an amount of from 1000 to 5000 parts by weight, preferably from 2000 to 3000 parts by weight, of carrier material per part by weight of tungsten.

8. Process according to any of the preceding claims,
**characterized in that**
steps a) and b) are carried out by passing the molybdate- or tungstate-containing aqueous solution through a fixed bed comprising the water-insoluble, cationized inorganic carrier material and steps c) and d) are carried out by passing an aqueous solution having a pH in the range from 6 to 14 through the fixed bed which has been laden with molybdate or tungstate in steps a) and b).

9. Process according to Claim 8,
**characterized in that**
the fixed bed comprises a water-insoluble filler material in addition to the water-insoluble, cationized inorganic carrier material.

10. Process according to Claim 9,
**characterized in that**
cellulose is used as water-insoluble filler material.

11. Process according to Claim 9 or 10,
**characterized in that**
the water-insoluble, cationized inorganic carrier material and the water-insoluble filler material are used in a weight ratio of from 10:1 to 1:100.

12. Process according to any of Claims 8 to 11,
**characterized in that**
at least two fixed beds connected in parallel are used, in which steps a) and b) and steps c) and d) are carried out alternately.

13. Process according to Claim 12,
**characterized in that**
the passage of the molybdate- or tungstate-containing aqueous solution through a fixed bed is carried out continuously by switching over between fixed beds connected in parallel.

14. Process according to any of the preceding claims,
**characterized in that**,
in an additional step, pulp is reacted in an aqueous mixture containing from 0.1 to 5% by weight of hydrogen peroxide and from 10 to 1000 ppm of molybdenum in the form of molybdate or from 200 to 10 000 ppm of tungsten in the form of tungstate, in each case based on the mass of dry pulp, at a temperature of from 30 to 100°C and a pH in the range from 1 to 7, the pulp is separated from the aqueous mixture, the resulting aqueous solution is contacted in step a) with the water-insoluble, cationized inorganic carrier material and the aqueous solution laden with molybdate or tungstate which has been separated off in step d) is recycled to the step of reaction of pulp with hydrogen peroxide.

15. Process according to Claim 14,
**characterized in that**
the aqueous mixture in the reaction of the pulp contains from 0.5 to 4% by weight, preferably from 1 to 3% by weight, of hydrogen peroxide, based on the mass of dry pulp.

16. Process according to Claim 14 or 15,
**characterized in that**
the aqueous mixture in the reaction of the pulp contains from 100 to 700 ppm, preferably from 200 to 600 ppm, of molybdenum, based on the mass of dry pulp, in the form of molybdate.

17. Process according to Claim 14 or 15,
**characterized in that**
the aqueous mixture in the reaction of the pulp contains from 500 to 5000 ppm, preferably from 1500 to 3000 ppm, of tungsten, based on the mass of dry pulp, in the form of tungstate.

18. Process according to any of Claims 14 to 17,
**characterized in that**
the reaction of the pulp is carried out at a temperature of from 60 to 95°C, preferably from 75 to 95°C.

19. Process according to any of Claims 14 to 18,
**characterized in that**
the reaction of the pulp is carried out at a pH of from 2 to 6, preferably from 2.5 to 5.5.

## Revendications

1. Procédé de récupération de molybdate ou de tungstate à partir d'une solution aqueuse, comprenant les étapes suivantes :
a) la mise en contact d'une solution aqueuse contenant du molybdate ou du tungstate avec un matériau support inorganique cationisé, insoluble dans l'eau, à un pH compris entre 2 et 6 pour obtenir un matériau support chargé en molybdate ou tungstate et une solution aqueuse appauvrie en molybdate ou tungstate,
b) la séparation du matériau support chargé en molybdate ou tungstate de la solution aqueuse appauvrie en molybdate ou tungstate,
c) la mise en contact du matériau support chargé en molybdate ou tungstate avec une solution aqueuse à un pH compris entre 6 et 14 pour obtenir un matériau support appauvri en molybdate ou tungstate et une solution aqueuse chargée en molybdate ou tungstate, et
d) la séparation du matériau support appauvri en molybdate ou tungstate de la solution aqueuse chargée en molybdate ou tungstate,
le matériau support inorganique cationisé étant une bentonite, hectorite ou attapulgite à ions échangés avec des ions tétraalkylammonium ou des esters d'acide gras d'alcanolamine quaternisés.

2. Procédé selon la revendication 1, **caractérisé en ce qu'**à l'étape a), le pH se situe dans la plage allant de 3 à 5 et de préférence dans la plage allant de 3,5 à 4.

3. Procédé selon la revendication 1 ou 2, **caractérisé en ce qu'**à l'étape c), le pH se situe dans la plage allant de 8 à 12 et de préférence dans la plage allant de 9 à 11.

4. Procédé selon l'une quelconque des revendications précédentes, **caractérisé en ce que** le matériau support inorganique cationisé est une bentonite à ions échangés avec des ions tétraalkylammonium ou des esters d'acide gras d'alcanolamine quaternisés.

5. Procédé selon l'une quelconque des revendications précédentes, **caractérisé en ce que** le matériau support inorganique cationisé est utilisé en une quantité de 10 à 1 000 parties en poids de matériau support par partie en poids de molybdène ou en une quantité de 200 à 10 000 parties en poids de matériau support par partie en poids de tungstène lors de la mise en contact avec une solution aqueuse contenant du molybdate ou du tungstate.

6. Procédé selon la revendication 5, **caractérisé en ce que** le matériau support inorganique cationisé est utilisé en une quantité de 50 à 500, de préférence de 100 à 300 parties en poids de matériau support par partie en poids de molybdène.

7. Procédé selon la revendication 5, **caractérisé en ce que** le matériau support inorganique cationisé est utilisé en une quantité de 1 000 à 5 000, de préférence de 2 000 à 3 000 parties en poids de matériau support par partie en poids de tungstène.

8. Procédé selon l'une quelconque des revendications précédentes, **caractérisé en ce que** les étapes a) et b) sont réalisées par passage de la solution aqueuse contenant du molybdate ou du tungstate au travers d'un lit fixe qui contient le matériau support inorganique cationisé insoluble dans l'eau, et les étapes c) et d) sont réalisées par passage d'une solution aqueuse d'un pH compris entre 6 et 14 au travers du lit fixe chargé en molybdate ou tungstate aux étapes a) et b).

9. Procédé selon la revendication 8, **caractérisé en ce que** le lit fixe contient un matériau de remplissage insoluble dans l'eau en plus du matériau support inorganique cationisé insoluble dans l'eau.

10. Procédé selon la revendication 9, **caractérisé en ce que** de la cellulose est utilisée en tant que matériau de remplissage insoluble dans l'eau.

11. Procédé selon la revendication 9 ou 10, **caractérisé en ce que** le matériau support inorganique cationisé insoluble dans l'eau et le matériau de remplissage insoluble dans l'eau sont utilisés en un rapport en poids de 10:1 à 1:100.

12. Procédé selon l'une quelconque des revendications 8 à 11, **caractérisé en ce qu'**au moins deux lits fixes connectés en parallèle sont utilisés, dans lesquels les étapes a) et b) et les étapes c) et d) sont réalisées en alternance.

13. Procédé selon la revendication 12, **caractérisé en ce que** le passage de la solution aqueuse contenant du molybdate ou du tungstate au travers d'un lit fixe a lieu en continu par commutation entre des lits fixes connectés en parallèle.

14. Procédé selon l'une quelconque des revendications précédentes, **caractérisé en ce que**, lors d'une étape supplémentaire, de la pâte cellulosique est mise en réaction dans un mélange aqueux contenant 0, 1 à 5 % en poids de peroxyde d'hydrogène et 10 à 1 000 ppm de molybdène sous la forme de molybdate ou 200 à 10 000 ppm de tungstène sous la forme de tungstate, à chaque fois par rapport à la masse de pâte cellulosique sèche, à une température de 30 à 100 °C et à un pH dans la plage allant de 1 à 7, la pâte cellulosique est séparée du mélange aqueux, la solution aqueuse résultante est mise en contact à l'étape a) avec le matériau support inorganique cationisé insoluble dans l'eau et la solution aqueuse chargée en molybdate ou tungstate séparée à l'étape d) est recyclée dans l'étape de mise en réaction de la pâte cellulosique avec du peroxyde d'hydrogène.

15. Procédé selon la revendication 14, **caractérisé en ce que**, lors de la mise en réaction de la pâte cellulosique, le mélange aqueux contient 0,5 à 4 % en poids, de préférence 1 à 3 % en poids, de peroxyde d'hydrogène, par rapport à la masse de pâte cellulosique sèche.

16. Procédé selon la revendication 14 ou 15, **caractérisé en ce que**, lors de la mise en réaction de la pâte cellulosique, le mélange aqueux contient 100 à 700 ppm, de préférence 200 à 600 ppm, de molybdène, par rapport à la masse de pâte cellulosique sèche, sous la forme de molybdate.

17. Procédé selon la revendication 14 ou 15, **caractérisé en ce que**, lors de la mise en réaction de la pâte cellulosique, le mélange aqueux contient 500 à 5 000 ppm, de préférence 1 500 à 3 000 ppm, de tungstène, par rapport à la masse de pâte cellulosique sèche, sous la forme de tungstate.

18. Procédé selon l'une quelconque des revendications 14 à 17, **caractérisé en ce que** la mise en réaction de la pâte cellulosique a lieu à une température de 60 à 95 °C, de préférence de 75 à 95 °C.

19. Procédé selon l'une quelconque des revendications 14 à 18, **caractérisé en ce que** la mise en réaction de la pâte cellulosique a lieu à un pH de 2 à 6, de préférence de 2,5 à 5,5.
